(19)

Europäisches
Patentamt
European
Patent Office
Office européen
des brevets

(11) **EP 4 281 608 B1**

(12) **EUROPEAN PATENT SPECIFICATION**

(45) Date of publication and mention
of the grant of the patent:
**29.01.2025 Bulletin 2025/05**

(21) Application number: **22728541.8**

(22) Date of filing: **10.05.2022**

(51) International Patent Classification (IPC):
*D04H 1/4234* (2012.01)   *B01D 39/10* (2006.01)
*B01D 39/12* (2006.01)   *B01D 39/20* (2006.01)
*B22F 3/00* (2021.01)   *H01M 4/04* (2006.01)
*H01M 4/80* (2006.01)

(52) Cooperative Patent Classification (CPC):
**D04H 1/4234; B01D 39/2044; B22F 3/002;
B22F 3/10; B22F 3/1103;** B01D 2239/10;
B01D 2239/1208; B01D 2239/1225;
B01D 2239/1241

(86) International application number:
**PCT/EP2022/062655**

(87) International publication number:
**WO 2022/238413 (17.11.2022 Gazette 2022/46)**

(54) **NETWORK OF METAL FIBERS AND METHOD OF ASSEMBLING A FIBER NETWORK**

NETZWERK AUS METALLFASERN UND VERFAHREN ZUR MONTAGE EINES
FASERNETZWERKS

RÉSEAU DE FIBRES MÉTALLIQUES ET PROCÉDÉ D'ASSEMBLAGE D'UN RÉSEAU DE FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2021 PCT/EP2021/062435**

(43) Date of publication of application:
**29.11.2023 Bulletin 2023/48**

(73) Proprietor: **Max-Planck-Gesellschaft zur
Förderung der
Wissenschaften e.V.
80539 München (DE)**

(72) Inventors:
• **HACKNER, Maximilian
73066 Sparwiesen (DE)**
• **SPATZ, Joachim
70569 Stuttgart (DE)**

(74) Representative: **Manitz Finsterwald
Patent- und Rechtsanwaltspartnerschaft mbB
Martin-Greif-Strasse 1
80336 München (DE)**

(56) References cited:
**WO-A1-2016/075005    WO-A1-2020/016240**

**Description**

The invention relates to a method of assembling a fiber network comprising a plurality of metal fibers as well as to a network of metal fibers.

Networks of fibers are nowadays used for a great variety of applications ranging for example from filters to batteries.

Conventionally, filtration of gases such as air or liquids is based on metal fiber meshes or foams. Such meshes or foams are nowadays part of a great variety of devices, ranging from oil filters in automotive applications to cleaning systems for fluids or gases such as air.

Conventionally known filters are usually based on metal fibers comprising a circular cross section (e. g. oil filters) or on carbon-based foams (e. g. HEPA filters). Filters made out of metal fibers with circular cross sections are characterized in that such fibers comprise a high mechanical stability while comprising small surface to volume ratios. However, such filters usually comprise a rather high weight since a great amount of fibers is needed. Filters made out of carbon foams, on the other hand, are mostly rather fragile while being light weighted and having a rather large inner surface area. Furthermore, it is noted that the filtration capacity of such conventionally known filters is not ideal.

In another application field, networks of metal fibers can also improve the performance of secondary batteries when being used as secondary electrodes. Such networks of metal fibers can also contribute to the performance in catalytic materials in electrochemical applications such as in fuel cells and hydrolysis, or as component in electromagnetic shielding materials, as filters, in polymer composites or as tissue material and tissue hybrid material which may also include as additives, e.g. cotton, silk or wool.

Because of said great variety of different application fields, the need of being able to fabricate fiber networks with different definite characteristics depending on their application field, is enhancing.

In conventionally known processes of fabricating fiber networks, a plurality of fibers is provided in a hot press and subjected to a high pressure. Then the plurality of fibers is placed in a furnace and slowly heated up to a temperature close to the melting temperature of the fibers while the plurality of fibers still being subjected to said pressure. The high temperature is maintained until the fibers connect to one another. Afterwards, the fabricated network is slowly cooled down.

The above described process is also known as "sintering". Such processes usually take up to one hour or more depending on the capacity of the oven used. It was now recognized that conventional sintering allows fibers to undergo relaxation before reaching temperatures high enough to connect the fibers to one another. These relaxation processes release stored energy from the fibers. As an example, fibers obtained by rapid cooling techniques, e.g. melt spinning, can have substantial amounts of stored energy.

The driving force for the above described process is the reduction of the surface of the fibers and the associated reduction in their free energy $\Delta G$. The free energy $\Delta G$ can be divided into a surface component $\Delta G_S$, a volume component $\Delta G_V$ and a grain boundary component $\Delta G_B$. This relationship is described in equation (1). During the sintering of the fibers, the volume fraction remains almost constant

($\Delta G_V = 0$), while the grain boundary fraction increases due to the transformation, i.e. the reduction of the surface ($\Delta G_B > 0$), and the volume fraction decreases ($\Delta G_V < 0$). The volume part $\Delta G_V$ clearly outweighs the grain boundary part $\Delta G_B$, which leads to a negative change in the total free energy of the system ($\Delta G < 0$) and the process takes place voluntarily as soon as a certain energy threshold (activation energy) is exceeded. During conventional sinter processes, reduction of $\Delta G$ is associated also with a rounding of the fibers, i.e. the fiber diameter transitions into a round shape, herein also referred to as rounding.

$$\Delta G_T = \Delta G_V + \Delta G_B + \Delta G_S \qquad\qquad (1)$$

The energy threshold to be exceeded here is the activation energy $E_A$ of the diffusion (equation (2)). Here $D_0$ is the temperature-dependent diffusion constant, k the Boltzmann constant, $T$ the absolute temperature and $D$ the temperature-dependent diffusion constant. The greater the temperature-dependent diffusion constant $D$ (in $m^2\ s^{-1}$), the faster the rounding of the fibers takes place. Here, the temperature is not only responsible for fulfilling the activation energy $E_A$, but also the speed-determining factor.

$$D(T) = D_0 e^{-\frac{E_A}{kT}} \qquad\qquad (2)$$

Such known sintering processes thus take place through a rearrangement process at the atomic level (diffusion) and not through a process with renewed melting of the fibers. The thermodynamic goal is to achieve the largest possible volume with the smallest possible surface. The perfect ratio here is achieved with a perfect sphere.

With the conventionally known methods for fabricating fiber networks this effect cannot really be controlled in order to produce, for example, fiber networks with fibers of a definite cross section.

It is therefore an object of the invention to provide a method of assembling a fiber network having increased control of the fiber cross section as well as a corresponding fiber network. This object is solved by the subject matter of the independent claims.

In particular, the present invention provides a method of assembling a fiber network, comprising a plurality of metal fibers, wherein the method comprises the following steps:

- providing a loose network out of the plurality of metal fibers at an assembling site;
- fixing the plurality of metal fibers to one another by forming contact points between the single metal fibers by the following steps of:

    heating the plurality of fibers at a heating rate higher than 50 K/min, in particular higher than 100 K/min, especially higher than 200 K/min, preferably higher than 1000 K/min, to a fixation temperature selected in the range of 50 to 98% of their melting point temperature; and

    cooling the plurality of fibers at a cooling rate higher than 20 K/min, preferably higher than 50 K/min, preferably higher than 100 K/min, in particular to a temperature below 60% of their melting point.

As described above, fibers which are subjected to heat tend to rearrange at an atomic level such that the largest possible volume with the smallest possible surface is achieved. The "most perfect" state, as seen from the fiber's point of view, is a perfect sphere. Thus, with common fabrication processes the fibers start to rearrange at their atomic level, because of the heating step, to reach a more preferable energy level by, for example, crystallizing or by reducing defects in the crystal lattice of the fiber. In consequence, the fibers may even change their shape by transforming their cross section from a flat or elliptic cross section into a circular cross section, i.e. rounding of the fibers' cross sectional shape occurs. During the transition towards the thermodynamically most preferred spherical shape not only rounding effects of the fibers' cross sectional shape can be observed, also changes in the diameters of the fibers can be observed. Before reaching the spherical shape, the fibers show sections with reduced diameters, herein referred to as constrictions. These constrictions develop further until the fibers are interrupted. Ultimately, the fibers transform into a plurality of droplets, i.e. they reach a spherical form.

The method of the present invention utilizes the kinetics of said rearrangement process. The rearrangement only takes place, when the fibers have sufficient time to do so. By increasing the heating rate as well as the cooling rate and by preferably keeping the fixation temperature equal to or less than 30 minutes it can be ensured that the metal fibers create contact points where they connect with one another. Nevertheless, said rearrangement processes are reduced drastically and especially the shape changing effect, i.e. the rounding and the formation of constrictions and interruptions, can be avoided. Therefore, in the method of the present invention the heating rates as well as the cooling rates are kept well above 20 K/min, preferably higher than 50 K/min, preferably higher than 100 K/min. In this connection it is noted that it may be preferable to cool the assembled network at said cooling rate to a temperature which is lower than 60% of the melting temperature of the fibers. Once the fibers are cooled down to said temperature rate, the cooling rate is not as crucial anymore and may thus also be lowered if necessary. Commonly known sintering processes take place at heating/cooling rates of about 10 to 20 K/min, thereby taking much longer to heat/cool the fibers (up to hours). When the heating rate is too low, relaxation processes may occur in the loose network of metal fibers before reaching the fixation temperature, reducing the surface component $\Delta G_S$ and the grain boundary component $\Delta G_B$ of the free energy. In consequence, when a low heating rate is applied in the step of heating the metal fibers, also referred to as the first method step, an additional fixation step may be necessary at which the fixation temperature is held for more than 30 minutes. By keeping the heating rate low, a fixation time of 30 minutes or less in said additional fixation step might be insufficient for fixing the fibers to one another, since the fixation cannot benefit to the same extend from surface component $\Delta G_S$ and grain boundary component $\Delta G_B$ as when applying the higher heating rates in the heating step. Requiring more time for reaching the fixation temperature and/or optionally keeping the fibers at a longer time at the fixation temperature results in the fibers being transformed into a thermodynamically more favoured state, i.e. the cross section of the fibers may change towards a round cross section. As already mentioned above, when fibers attempt to transform into a thermodynamically more stable state, not only the cross section may change, also the width of the fibers may become non-uniform and/or constrictions of the fiber width may occur. These constrictions may even interrupt the fibers, so that the fiber length is reduced, as demonstrated by the enclosed Figures and discussed in more detail below.

By applying the method of the present invention, the loose network of fibers can be assembled to a network of fixed fibers with minimal (unwanted) effects on their atomic level. In consequence, the fibers' cross sectional shape and length can be maintained. As explained above, with conventionally known methods this was not possible since said stored energy would be released from the fibers already during heating before reaching the respective fixation temperatures. In consequence, for common sintering processes the fibers are in a thermodynamically more stable state when reaching the fixation temperatures. In turn, higher fixation temperatures and higher fixation times are required, driving a change of the fibers' cross sections, diameters and/or lengths.

In the method according to the present invention, the temperature applied, i.e. the fixation temperature, depends on the material of the metal fibers. To avoid amorphous metal fibers from crystallizing during the welding process, it is preferable to keep the temperature applied below the crystallization temperature of these fibers. The crystallization temperature can, for example, be determined by differential scanning calorimetry (DSC) measurement for the metal fibers in question. DSC measurements can be performed using the following conditions: starting temperature 30 °C with a heating rate of 10 K min$^{-1}$ until 1200 °C, continued with a cooling rate of 10 K min$^{-1}$ until room temperature. DSC measurements may be performed in an argon atmosphere with a constant argon flow of 100 ml min$^{-1}$ and a zirconium-oxygen-trap system for a complete oxygen free atmosphere (STA 449 F3 Jupiter, Netzsch Bj. 2017).

In the context of the description of the invention "% of the melting temperature" refers to the melting temperature in °C, as determined by, for example, differential scanning calorimetry (DSC) measurements. Accordingly, if the melting temperature is 1000 °C, in the context of the description of the invention 20% of the melting temperature is 200 °C, 50% of the melting temperature is 500 °C and 95% of the melting temperature is 950 °C.

Furthermore, as an additional effect, with the method according to the invention a network can be assembled which is flexible and can be deformed repeatedly without causing degradation of the network, i.e. without separating single metal fibers out of the network of metal fibers due to deformation. The metal fibers are fixed to one another, so that the metal fibers contact each other, i.e. the point of contact is not movable relative to the metal fibers as it is the case for example in a nonwoven agglomeration of entangled metal fibers, such as a metal felt. As a consequence, the network of metal fibers according to the invention is mechanically stable yet flexible. Mechanically stable in this context means that the network of metal fibers is not a loose agglomeration of metal fibers, i.e. the network does not disintegrate into isolated metal fibers as soon as a small force acts on the network. Accordingly, such a network of metal fibers can be flexibly deformed without breaking. It is possible that the network of metal fibers recovers its form after deformation. However, if the network of metal fibers is folded, it is also possible to reshape it permanently.

With the method according to the invention it is further possible that the contact points are distributed throughout the whole assembled network, so that throughout the 3-dimensional structure of the network of metal fibers contact points are present. Accordingly, the contact points are not only provided in a certain area of the network of metal fibers such as in the center or in the circumference of the network. It could be possible that the points of contact are evenly distributed throughout the network. It could further be possible that the density of contact points has a gradient throughout the network, i.e. that the network has areas with a higher density of contact points and areas with a lower density of contact points. It is also possible to have ordered or random spatial distributions of contact points.

In this connection it is further noted that each one of the metal fibers can have at least two contact points with other metal fibers, more preferably at least three contact points, even more preferably at least four contact points.

According to an embodiment of the invention, the method may further comprise a step of keeping said fixation temperature for a fixation time selected in the range of 0 seconds to 30 minutes, in particular in the range of 0 seconds to 15 minutes, preferably in the range of 0 seconds to 5 minutes, with said step of keeping said fixation temperature being carried out before the step of cooling the plurality of fibers. Thus, as already mentioned above, the method can comprise the additional step of keeping the said fixation temperature for a predetermined time. However, it could also be shown that by keeping the heating rate high, the fixation time can be reduced to a minimum. That is, in some cases it can even be possible to start the cooling process as soon as the fixation temperature has been reached, thereby keeping said temperature for basically 0 seconds. In this connection it should be noted that, obviously, in reality the fixation time is not exactly 0 seconds but rather somewhat around 0.1 seconds or less when the cooling process is started immediately after reaching the fixation temperature. Thus, in the context of this application, a fixation time of 0 seconds relates to the case where the cooling step is initiated directly after reaching the fixation temperature during the heating step. For some embodiments, the fixation time may be 1 second or more, 2 seconds or more, 3 seconds or more, 10 seconds or more or even 30 seconds or more.

According to another embodiment the method may comprise a cleaning step to be carried out before the step of fixing the plurality of fibers to one another, with said cleaning step comprising cleaning the plurality of fibers by heating the plurality of fibers to a cleaning temperature selected in the range of 20% to 60% of the melting temperature of the fibers. The lower limit may even be chosen to lie at room temperature, in particular slightly above room temperature. It has been shown that metal fibers often comprise different types of impurities and/or additives on their surfaces which are usually a biproduct of their respective manufacturing processes. By heating the fibers up to said cleaning temperature, the impurities and/or additives decompose, i.e. evaporate or burn, such that the remaining fibers comprise a clean surface. Such clean surfaces are then easier and better to sinter to one another.

In this connection it should be noted that in ideal cases the cleaning temperature should lie well below the temperature at which the fibers start to lose their stored energy, i.e. below the temperature at which the above mentioned rearranging processes tend to take place. This way, the fibers can be cleaned from said additives/impurities without already starting to sinter to one another.

In the unwanted case that the cleaning temperature has been chosen at a temperature at which the fibers already start to reassemble at their atomic level, e.g. due to the characteristics of the additives present on the surfaces of the fibers, special care must be taken by keeping the fibers at said cleaning temperature for a time period that is as short as possible, i.e. only until the fibers are cleaned. In such cases it may later be necessary to adapt the fixation temperature of the following heating step to higher temperatures in order to be able to effectively sinter the cleaned fibers to one another. The minimum time period for cleaning the fiber may be easily determined by trial and error.

Hence, said cleaning temperature can be chosen depending on the material of the fibers as well as the materials of the additives/impurities from which the fibers should be cleaned.

The step of cleaning the plurality of fibers can be carried out at the same assembling site, i.e. in the same oven, as the step of heating the plurality of fibers to the fixation temperature. Such an arrangement is usually referred to as a batch process. In other embodiments different ovens or a single oven having different heat zones may be present through which the plurality of fibers travel for each method step. Such processes, on the other hand, are referred to as continuous processes and are particularly favourable when high amounts of fibers are supposed to be processed.

Said step of cleaning the plurality of fibers may further also comprise applying a flow of gas at the assembling site. Such a flow of gas may help removing the evaporated/decomposed additives from the surroundings of the plurality of fibers such that once the fibers are cooled down again, said additives cannot reassemble on the plurality of fibers again.

Said flow of gas may be provided, for example, by applying suction to the assembling site to suck the burnt/evaporated additives from the assembling site. Another possibility may be to provide a stream of gas, for example a reactive gas, such as oxygen or air, or an inert gas, such as nitrogen or argon, at the assembling site that is configured to blow the evaporated/burnt additives away from the assembling site. The kind of method to provide said stream of gas may be chosen in accordance with the other conditions present at said assembling site, e.g. whether the assembling site is provided in a vacuum, in air or in a protective gas. For example, in case the fibers are made out of a material that tends to react with oxygen, the stream of gas provided clean the surroundings from the additives may be chosen such that it does not contain oxygen by providing an inert or protective gas, for instance.

It may further be possible that the step of cleaning the plurality of fibers comprises reducing the atmospheric pressure at the assembling site. This may for example be useful for additives that comprise a high vapour pressure. The atmospheric pressure may be reduced to less than 80 kPa, to less than 50 kPa, or to less than 10 kPa. In some embodiments the pressure may even be reduced down to less than 1 kPa, less than 0.1 kPa or even as low as 0.0001 kPa, i.e. a vacuum may be applied. Atmospheric pressure as used herein corresponds to a pressure of 101 kPa.

Said vapour pressure is defined as the pressure exerted by a vapour in thermodynamic equilibrium with its condensed phases (solid or liquid) at a given temperature in a closed system. The equilibrium vapour pressure is an indication of a liquid's evaporation rate. It relates to the tendency of particles to escape from the liquid (or a solid). A substance with a high vapour pressure at normal temperatures is often referred to as volatile. The pressure exhibited by vapour present above a liquid surface is known as vapour pressure. As the temperature of a liquid increases, the kinetic energy of its molecules also increases. As the kinetic energy of the molecules increases, the number of molecules transitioning into a vapour also increases, thereby increasing the vapour pressure.

In this context, a further aspect of the present invention, the cleaning of the plurality of fibers also encompasses determining the compound to be removed, i.e. said additive. Further, in this aspect of the present invention, the step of cleaning the plurality of fibers comprises further the reduction of the pressure and/or the increase of the temperature based on a vapour pressure curve of said compound to be removed. Reducing the pressure and/or increasing the temperature is in particular conducted in a manner so that the fibers are finally subjected to conditions in which the compound to be removed is, in accordance with its vapour pressure curve, in a gas phase. The pressure and/or temperature change may be conducted in a step wise manner, i.e. by changing pressure and/or temperature in increments and maintaining these parameters afterwards substantially constant for a certain time, or by changing pressure and/or temperature in a continuous manner. Required pressures and/or temperatures may vary significantly for different compounds to be removed. However, available vapour pressure curves provide a suitable guidance for the skilled person on appropriate cleaning conditions, without overheating the fibers to more than 60% of their melting point.

Hence, for some materials a reduction of the atmospheric pressure at the assembling site can lead to an evaporation of said material, thereby enhancing the cleaning effect. This may be done in connection with the heating of the fibers to the cleaning temperature.

According to an embodiment before fixing the plurality of metal fibers to one another the method further comprises a step of subjecting the plurality of metal fibers to a predetermined pressure, which is in particular less than 1 MPa, especially less than 500 kPa. With the method according to the invention a comparatively low pressure can be applied in order to ensure the fibers create contact points where they connect to one another. With previously known methods, it was necessary to apply a rather high pressure in order to create contact points.

It is further preferable to provide a protective gas at said assembling site, such as argon, nitrogen, Ar-W5 (5 vol.-% H2 in Ar), Ar-W2 (2 vol.-% H2 in Ar), a forming gas (5 vol.-% H2 in N2) or other noble gases in order to avoid oxidation of the fibers during the assembling process. This step may be relevant for both the step of the heating the plurality of fibers to the fixation temperature as well as the step of keeping the fibers at said fixation temperature, the latter if carried out at all. Generally, the method according to the invention can also be carried out in vacuum. Thus, the precise conditions at the assembling site may be chosen, for example, depending on the materials used for the fibers. For instance, some materials such as iron and/or some steels cannot be used together with nitrogen since they tend to nitriding. Therefore, for such materials another protective gas may be used.

According to another embodiment of the invention the step of heating the fibers is carried out by a suitable heating device. Preferred examples for such heating devices are induction furnaces, infrared furnaces, high temperature ceramic heating elements and/or zone furnaces such as, for example, conveyor furnaces. Such heating devices can ensure a fast heating, i.e. high heating rates, as well as fast cooling, i.e. high cooling rates, such that the plurality of fibers can be connected to one another without having the fibers loose too much energy due to rearrangement and relaxation processes or anything alike before reaching the fixation temperature. The heating device may suitably be a continuous furnace or a batch furnace.

In some embodiments said suitable heating device for carrying out the step of heating may be a continuous furnace. Such a continuous furnace is often a preferred option in applications with high production rates, i.e. when a high amount of fibers is supposed to be processed (industrial applications).

It is preferred that the fixation temperature is determined in-situ by electron microscopy. This can be done, for example, by placing fibers in an in-situ SEM (scanning electron microscope) heating stage. The fibers need a good thermal connection to the heating stage due to the nearly non-existing heat transfer in a high vacuum.

For this, heat stabile graphite papers can be used. Hence, one sheet may be used as support between the fibers and the heating stage and another one with a hole in the middle may be used to view the fibers. These fiber sandwiches may then be transferred to the heating stage and pressed down. Afterwards, the heating stage may be heated to a temperature which is close, but still lower than the melting temperature of the fibers. Meanwhile, the fiber cross-section may be observed with the SEM until the fibers start to connect to one another. In this connection the fixation temperature may be determined. In a second experiment, the fiber sandwich may be heated at a heating rate, as mentioned above, to said determined fixation temperature. Said fixation temperature may then optionally be held for a fixation time until the wanted degree of connection and therefore the wanted strength of connection is reached. Thus, in other words, in a second experiment the method steps according to the invention may be carried out in order to check whether the determined fixation temperature is correct.

Fixation temperature and time depends on the material of the fibers, the dimension of the fibers, i.e. width and thickness, and the amount of stored energy in the fibers. For example, for fine fibers of a given material having a low thickness and width rounding processes tend to occur faster compared to less fine fibers of the same material. Determining the fixation temperatures and times for a specific type of fiber is possible using either above mentioned in-situ by electron microscopy or by using trial and error tests. Trial and error tests can be carried out using the actual equipment for producing the network of metal fibers, i.e. under the actual manufacturing conditions.

In this connection it is noted that it may be preferred that the fixation temperature is selected in the range of 80 to 98%, in particular in the range of 90 to 98%, of the melting temperature of the metal fibers. Fixation temperatures in said range turned out suitable for most materials. In this connection it is noted that the precise fixation temperature may also depend on the fixation time. That is, the higher the fixation temperature, the shorter the fixation time may be and vice versa.

The cooling rate in cooling step is preferably maintained for a sufficient period for the metal fibers to cool below 60% of the melting temperature of the metal fibers.

The method steps according to the invention, i.e. the heating and cooling steps, optionally also the step of keeping the fibers at the fixation temperature, are carried out in a combined period of time which is preferably less than 30 minutes, preferably less than 15 minutes, in particular less than 5 minutes, especially less than 1 minute. It has shown that the faster the method is performed the less negative side effects occur, such as for example release of energy, formation of fiber constrictions and/or interruptions and change of fiber cross-sectional shape. Also, in this context, it is to be noted that the cooling step does not necessarily require a cooling until room temperature. Said step may be terminated after cooling to a temperature of 60% of the melting temperature of the metal fibers.

In this connection it is noted that it may be possible that the predetermined period of time is equally split up between said steps. In other embodiments it can also be possible that the step of keeping the fixation temperature, if applied, takes much longer compared to the steps of heating and cooling the fibers. In an ideal experiment, for example, the steps heating and cooling the fibers may take 1 minute while the step of keeping the fixation may take 30 or even less seconds. In other experiments, however, the heating step may be carried out within 1 to 5 minutes, the step of keeping the fixation temperature within 0.5 to 1 minute and the cooling step within 10 minutes until the assembled network is cooled down to a temperature of about 60% of the melting temperature of the used fibers. The further cooling of the assembled network to room temperature may, for example, take another 1 to 2 hours.

It may be preferable that the metal fibers comprise a length of 1.0 mm or more and/or a width of 100 $\mu$m or less and/or a thickness of 50 $\mu$m or less. With the metal fibers having such dimensions, it is possible to produce the network with metal fibers that are fixed to one another, without needing to heat the metal fibers for a time of more than 30 minutes to temperatures close to their melting point. Conventional sintering techniques require temperatures close or even slightly above the melting temperature of the metal to be maintained for a relatively long period of time. This can result in melting or at least softening the material of the metal fibers to a certain degree, so that the metal fibers form a metal foil rather than a network, in particular when relatively high pressure is applied during sintering. Since the network of metal fibers is not a metal foil, i.e. the structure of the metal fibers used for producing the network of metal fibers can still be recognized in the network of metal fibers. Accordingly, in a cross-sectional view of network of metal fibers, there are voids which are not part of the metal fibers but are in between the metal fibers of the network fibers.

In accordance with the present invention, it is preferable that the metal fibers, before fixing them one to another, show an exothermic event when heated in a DSC measurement, wherein the exothermic event releases energy in an amount of 0.1 kJ/g or more, more preferably in an amount of 0.5 kJ/g or more, even more preferably in an amount of 1.0 kJ/g or more and most preferably in an amount of 1.5 kJ/g or more. The absolute amounts depend very much on the used metal or metal alloy. The extent of the exothermic event can be determined by comparing DSC measurements of the metal fibers before and after thermal equilibration. In other words, the metal fibers showing such an exothermic event are not in their thermodynamic equilibrium at ambient temperatures. During heating in a DSC measurement, the metal fibers can transit from a metastable to a thermodynamically more stable condition, e.g. by crystallization, recrystallization or other relaxation processes reducing defects in the lattice of metal atoms. An exothermic event observed for the metal fibers when being heated, e.g. during a DSC measurement, indicates that the metal fibers are not in their thermodynamic equilibrium, e.g. the metal fibers can be in an amorphous or nanocrystalline state containing defective energy and/or crystallization energy which is released during heating of the metal fibers due to occurrence of crystallization or recrystallization. Such events can be recognized e.g. using a DSC measurement. It was found that networks of metal fibers which show such an exothermic event have an improved strength after the metal fibers are fixed to one another.

According to another embodiment the metal fibers comprise a non-round cross section, in particular a rectangular, quadratic, partial circular or an elliptical cross section with a large axis and a small axis. Such cross-sections usually lead to fibers which are not in their thermal equilibrium, i.e. in a metastable state, which, for some applications, may be beneficial.

In this connection it is noted that, obviously, the value of the small axis must be smaller than the value of the large axis. In the case in which the small axis comprises a higher value, i.e. a greater length, than the large axis, the definition of "small" and "large" must simply be interchanged.

It may be preferred that a ratio of the small axis to the large axis lies in the range of 1 to 0.05, preferably in the range of 0.7 to 0.1, in particular in the range of 0.5 to 0.1. As it is generally known, the ratio between the lengths of the small and the large axis of an ellipse is higher the more the ellipse looks like a circle, for which the ratio would be 1. The smaller the value of the ratio is, the flatter is the ellipse. Thus, the ratio of the small axis to the large axis is in particular less than 1.

Alternatively, the metal fibers may comprise a round cross-section. For such a cross-section a ratio of a "large" axis to a "small" axis would obviously be exactly

1. Round cross-sections comprise an energetically more preferred state the cross-sections comprising an aspect ratio that is smaller than 1. Hence, fibers with round cross-sections are energetically closer to their equilibrium state than fibers with cross-sections of other shapes.

According to another embodiment of the invention the metal fibers are obtainable by subjecting a molten material of the metal fibers to a cooling rate of $10^2$ K min$^{-1}$ or higher, in particular by vertical or horizontal melt spinning. Such metal fibers produced by melt spinning can contain spatially confined domains in a high-energy state (i.e. in a metastable state), due to the fast cooling applied during the melt spinning process. Fast cooling in this regard refers to a cooling rate of $10^2$ K·min$^{-1}$ or higher, preferably of $10^4$ K·min$^{-1}$ or higher, more preferably to a cooling rate of $10^5$ K·min$^{-1}$ or higher.

Also, fibers obtained by melt spinning often comprise rectangular or semi-elliptical cross sections, which are preferred for certain application fields since they are far away from their equilibrium state. Examples for melt spinners with which such fibers can be produced are for example known from the not yet published international application PCT/EP2020/063026 and from the published applications WO2016/020493 A1 and WO2017/042155 A1,

According to another example, at least some of the metal fibers of the plurality of metal fibers are amorphous or at least some of the metal fibers of the plurality of metal fibers are nanocrystalline. Nanocrystalline metal fibers contain crystalline domains. Upon heating to a temperature of about 20-60% of the melting temperature of the nanocrystalline metal fibers, these domains undergo recrystallization resulting in an increase of the average size of crystalline domains compared to the average size of the initial crystalline domains in the nanocrystalline metal fibers before heating. It is also possible to mix non-equilibrated (e.g. nanocrystalline or amorphous fibers) with equilibrated (e.g. annealed) fibers.

In some applications it is preferred that the metal fibers are in electrical contact with one another. This can for example be preferable if the assembled networks are supposed to be used in electrochemical applications, such as batteries, fuel cells or anything alike.

According to an embodiment the metal fibers are in direct electrical contact with one another such that the electrical conductivity can be enhanced to a maximum. In this regard it is particularly preferable that all of the metal fibers are sintered to other metal fibers, most preferably directly to other metal fibers, without the need of an additional binder, e.g.

a polymeric binder. It is therefore further preferred that the metal fibers are fixed to one another without a polymeric binder, since such polymeric binders often have a poor electrical conductivity and high temperature performance.

It may be preferable that the metal fibers contain at least one of copper, silver, gold, nickel, palladium, platinum, cobalt, iron, chromium, vanadium, titanium, aluminum, silicon, lithium, manganese, boron, combinations of the foregoing and alloys containing one or more of the foregoing, such as CuSn8, CuSi4, AlSi1, Ni, stainless steel, Cu, Al or vitrovac alloys. Vitrovac alloys are Fe-based and Co-based amorphous alloys. It may particularly be preferred if the metal fibers are made of copper or of aluminum or of a stainless steel alloy. Different types of metal fibers can be combined with each other, so that the filter can contain for example metal fibers made of copper, one or more stainless steel alloys and/or aluminum. Networks being made out of metal fibers, wherein the metal fibers are of copper, aluminum, cobalt, stainless steel alloys containing copper, aluminum, silicon and/or cobalt, are particularly preferred.

According to another aspect of the invention a network of metal fibers is provided, wherein said network comprises a plurality of metal fibers fixed one to another at contact points, and wherein the metal fibers either comprise a non-round cross section, for example a rectangular, quadratic, partial circular or an elliptical cross section with a large axis and a small axis, or wherein the metal fibers comprise a round cross section. The fibers further comprise a width which is generally constant along a length of the fiber such that a variation of the width of the fiber along its length is preferably less than 40%, more preferably less than 30% or even more preferably less than 20%.

Preferably, the width of the fibers along their length changes by less than 20%, more preferably by less than 10%, even more preferably by less than 5% or most preferably by less than 1%. The change of the fibers' widths refers herein to a comparison of a fiber width before and after sintering the fibers to one another.

In conventionally known networks, the fibers usually comprise random shapes such that it cannot be ensured that the width of a single fiber does not vary very much along its length. If a fiber, for example, would comprise large variations of its width, it could be possible that said fiber would tear apart at a section which comprises a smaller width, i.e. the fiber has a constriction which turns then into an interruption. Fibers with a (nearly) constant width, on the other hand, have the advantage that the single fibers can connect to one another at any given point along their length without showing the risk of being interrupted during this process.

In this connection it is noted that it is preferable that the metal fibers are substantially constant in width, i.e. the width variation of the fiber along its length is preferably less than 40%, more preferably less than 30% or even more preferably less than 20%. As mentioned above, when metal fibers are heated up at a low heating rate, rearrangement processes on an atomic level occur in order to reach an energetic level which is closer to their equilibrium state. This sometimes even leads to changes in the shapes of the fibers since a perfect sphere would be the most preferred state. When such shape changes start to arise it can be possible that the fibers begin to decompose by building up constrictions which can cause interruptions of said fibers. Ultimately, the fibers transform into metal droplets when heated too long. The method according to the invention utilizes fast heating and cooling rate and, if applied, a reduced fixation time. In the resulting network of fixed metal fibers, the fibers are substantially free of such interruptions such that the length of the fibers is preserved. Further, due to the high heating and cooling rates, shape changes of the fibers cross section can be avoided, i.e. there is a kinetic control over the fiber shape. In consequence, the method of the present invention provides high control about the fiber shape.

It can be preferred that the fibers of the plurality of fibers are sintered to one another, more preferred directly sintered to one another. This ensures that no further frame or anything alike is needed in order to keep the fibers together. Furthermore, by directly sintering the metal fibers to one another, the points of connection are electrically conductive. This provides a relatively low internal resistance for the network of metal fibers.

It may be preferable that a ratio of the small axis to the large axis lies in the range of 1 to 0.05, preferably in the range of 0.7 to 0.1, in particular in the range of 0.5 to 0.1. As already mentioned above fibers with a flatter cross-section are energetically wise further away from their equilibrium state such that they store more energy compared to fibers which comprise, for example, a round cross-section.

It may in fact be possible to choose the characteristics network according to the application of the network by using fibers with a higher or lower ratio between the lengths of the small and large axis as described above. Hence, by using fibers with a lower ratio, the mechanical stability as well as the weight of the network decreases, whereas by using fibers with a higher ratio, the mechanical stability as well as the weight of the network increases. It may be chosen according to the application which characteristic is more important. Due to the kinetic control provided by the present invention, the fibers' shapes are substantially maintained, i.e. the fibers' aspect ratios are substantially preserved. In consequence, the network characteristics can be easily adjusted by starting with fibers having the desired final shape.

According to an embodiment the network is an ordered or an unordered network. Such an unordered network has, for example, a good electrical conductivity in every direction and anisotropic fluidic properties. Moreover, it is easier to produce an unordered network of metal fibers, compared to an order network of fibers. Nevertheless, in some applications it may be preferred that the fibers in the network are combed in different directions to provide directionality of individual fibers. Accordingly, it may be preferred that in the network some or all of the fibers have an orientation, i.e. the lengths of the fibers are not oriented randomly but have a predominant orientation in one or more spatial direction. By having a predominant orientation of the metal fibers, the filter can have isotropic fluidic properties.

According to another embodiment of the invention the network has open pores between the metal fibers of the plurality of metal fibers. The porosity of the network is preferably up to 95 vol%. It is also preferable that the porosity of the network is more than 80 vol%. It is even more preferable when the porosity is in the range of 80 vol% to 95 vol%. It is possible to incorporate active materials into the open pores, such as active electrode materials or active catalyst materials. It is further preferable that in the network according to the invention at least some of the metal fibers of the plurality of metal fibers are at least partially coated. The coating can for example be an active material, such as an electrode active material which interacts with Li-ions in batteries or a catalytically active material which coverts CO to $CO_2$ or is active in hydrolysis. It is also possible to apply a coating onto the metal fibers which improves the fixation of the metal fibers to one another, and thereby increases the mechanical strength of the network. The porosity can be determined using a micro-computertomograph to reproduce the network structure and then evaluate the porosity using the bubble point method described below.

By way of example, such active electrode materials for batteries are: for the anode: Graphite, Silicon, Silicon-Carbide (SiC) and Tin-Oxide (SnO), Tin-Dioxide ($SnO_2$) and Lithium-Titanoxide (LTO); and for the cathode: Lithium-Nickel-Manganese-Cobalt-Oxide (NMC), Lithium-Nickel-Cobalt-Aluminium-Oxide (NCA), Lithium-Cobalt-Oxide (Li-$CoO_2$) and Lithium-Iron-Phosphate (LFP).

The network may comprise an average mean pore size selected in the range of 0.1 to 100 $\mu$m, preferably in the range of 0.5 to 50 $\mu$m, in particular in the range of 1 to 10 $\mu$m. The mean pore size can be determined using a micro-computertomograph to reproduce the fiber structure and then evaluate the mean pore diameter using the bubble point method. The bubble point method determines the largest ball diameter, which might fit between two fibers, which is considered the pore size. More in detail, a point is placed at the center between two fibers and the radius of the bubble, with the point as a center is increased, until contact to the surface of both fibers is made. The diameter of the bubble corresponds to the pore size. If at any given parameter the bubble diameter only contacts one fiber, the center point is displaced into the direction of the fiber that the bubble did not contact.

It is particularly preferable if the network of metal fibers according to the invention the metal fibers are fixed, in particular directly fixed, to one another at points of contact which are randomly distributed throughout the network of metal fibers. According to another inventive aspect, it is preferred that the points of contact are not randomly distributed but are provided e.g. in a peripheral region of the network of metal fibers or that the metal fibers are ordered so that also the point of contacts are ordered. It is further preferred that the points of contact at which the metal fibers are fixed to one another are localized in specific areas and not provided evenly over the complete network of metal fibers. With the points of contact at which the metal fibers are fixed to one another being present only in separated areas, it is possible that the fibers inbetween these areas have a high flexibility while at the same time the mechanical stability and good electrical conductivity is ensured.

The thickness of the network of the invention is not particularly limited. However, it can be preferred if the network has a thickness of 0.01 mm or more. It is more preferred that the thickness of the network is 0.03 mm or more, even more preferred 0.05 mm or more, even more preferred 0.07 mm or more and most preferred 0.1 mm or more. If the thickness of the network is less than 0.01 mm, there is a risk that the mechanical stability of the network is not sufficient. The upper limit for the thickness of the network is not particularly limited. However, depending on the application, the upper limit may be 3.0 mm or less, or 2.5 mm or less. For battery applications, a preferred thickness of the network is in the range from 0.1 mm to 0.5 mm. A network with a thickness in this range is advantageous concerning the stacking and rolling of the active material coated network for producing batteries. Another preferred thickness range is in the range of greater than 0.5 mm to 5 mm, more preferably in the range of 1 to 3 mm.

According to another aspect of the invention a network of metal fibers is provided, wherein said network may for example be the network according to the invention, that is obtainable by the method according the invention.

The invention will now be described in further detail and by way of example only with reference to the accompanying drawings and pictures as well as by various examples of the network and method of the invention. In the drawings there are shown:

Fig. 1:    an exemplary scheme illustrating typical processes that may occur during sintering;

Fig. 2:    frames of a video showing sintering and relaxation of CuSi4;

Fig. 3:    frames of a video showing sintering and relaxation of AlSi1;

Fig. 4:    micrographs of a conventionally sintered fiber network;

Fig. 5:    micrographs of sintered CuSi4 fibers having a flat shape;

Fig. 6: micrographs of sintered AlSi1 fibers having a flat shape; and

Fig. 7: micrographs of cleaned and sintered AlSi1 fibers having a flat shape.

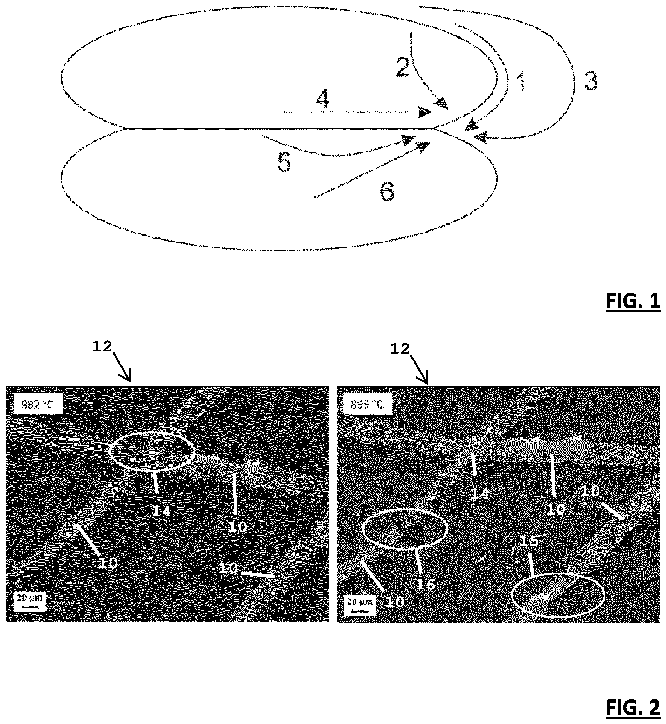

Figure 1 shows the typical diffusion processes causing relaxation during a sintering process. The different arrows show the surface diffusion 1, the lattice diffusion (from the surface) 2, the evaporation and condensation 3, the grain boundary diffusion 4, the lattice diffusion (from the boundary region) 5 and the volume diffusion 6. While processes 1-3 lead to no shrinkage and only connect the fibers to one another, processes 4-6 remove material from the border region and deposit it on the sintered necks. The reason for this, as it is already explained above, is the reduction of the surface of the fibers and the associated reduction in their free energy $\Delta G$.

By the method of the present invention only the border region of the metal fibers is thermally activated so that the fibers 10 sinter together but not the whole fiber 10 is rounded in order to maintain the fiber shape and dimension, which may be associated with an enlarged surface providing beneficial properties for many applications, e.g. electrochemical applications or filtering applications.

The method, according to the invention, a loose network of fibers 10 is provided at the assembling site 12. Said fibers 10 are then fixed to one another by forming points of contact 14 between the single fibers 10. For creating said contact points 14, the method according to the invention provides three steps:

A. The plurality of fibers 10 is heated at a heating rate higher than 50 K/min, in particular higher than 100 K/min, especially higher than 200 K/min, preferably higher than 1000 K/min, to a fixation temperature selected in the range of 50 to 98% of their melting point temperature.
B. Then, optionally, said fixation temperature can be kept for a fixation time selected in the range of 0 seconds to 30 minutes, in particular in the range of 0 seconds to 15 minutes, preferably in the range of 0 seconds to 5 minutes.
C. At last, said plurality of fibers 10 is cooled at a cooling rate higher than 50 K/min, preferably higher than 100 K/min, in particular to a temperature below 60% of their melting point

Additionally, before performing said three steps A, B and C, the fibers 10 can be subjected to a pressure to ensure that the single fiber 10 come into contact with each other. Said pressure can be relatively low, i.e. in the range of 0.05 to 1 GPa and serves the formation of contacts between the unconnected metal fibers. It is not necessary to maintain the pressure when carrying out steps A, B and C, i.e. it is sufficient to compress the fibers briefly by applying said pressure only before but not during carrying out steps A, B and C. It is preferred to not apply an external pressure force during steps A, B and C. By avoiding external pressure force, the risk of transforming the metal fibers into a metal foil can be avoided, in particular when operating with fixation temperatures close to the melting temperature.

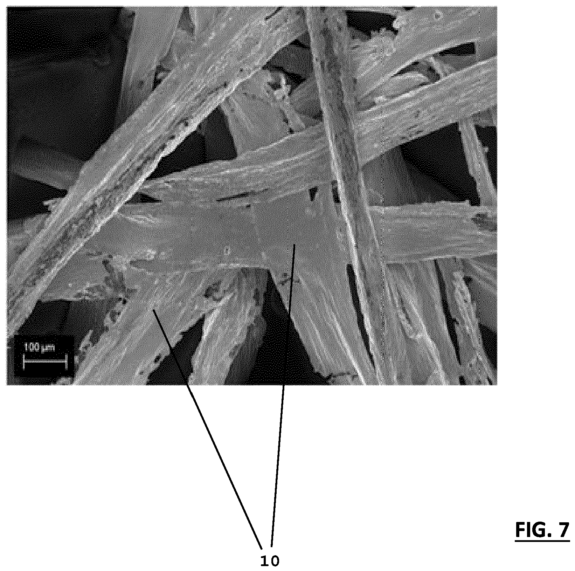

Furthermore, before carrying out the above steps A, B and C, an additional cleaning step can be carried out which includes heating the plurality of fibers 10 to a cleaning temperature such that additives and/or impurities, which can be present on the surfaces of the fibers 10, decompose, i.e. evaporate or burn, thereby leading to clean surfaces of the fibers 10. This step of cleaning the fibers 10 is further explained below in connection with Fig. 7.

As can be seen, compared to conventionally known methods, steps A, B and C are performed more quickly. A maximum time for performing all three steps can be defined as less than 45 minutes, even in the range of about 15 minutes. It could already be shown that times below 5 minutes and even below 1 minute are possible with the method according to the invention. This lies well below the common times used for sintering which conventionally takes up to several hours.

In order to be able to realize such short time frames, steps A, optionally also step B, and C are performed with a furnace or another heating device which is configured to provide high heating and cooling rates such as an induction furnace, infrared furnace, high temperature ceramic heating elements and/or zone furnaces such as, for example, conveyor furnaces (not shown in the drawings).

It is of particular interest that the fibers 10 which are supposed to be connected to one another, are heated up to a precise fixation temperature which lies in the range of 50 to 98%, in particular in the range of 80 to 98%, more particular in the range of 90 to 98%, of the melting temperature of said fibers 10. The precise fixation temperature depends on the materials used for the fibers 10 (see also Tables 1 and 2 below). Choosing the right fixation temperature allows to connect the fibers 10 to one another without having them start to change their shape, i.e. to round, because of the above described relaxation processes, or without having them start to melt.

In order to being able to determine said fixation temperature and time, trial and error experiments and/or electron microscopic examinations can be carried out on samples of the actual metal fibers. For the electron microscopic examination, fibers are placed in an in-situ SEM (scanning electron microscope) heating stage. For this, the fibers need a good thermal connection to the heating stage due to the nearly non-existing heat transfer in a high vacuum. Therefore, heat stable graphite papers can be used: for example, one sheet as support between the fibers and the heating stage and another one with a hole in the middle to view the fibers. Such fiber sandwiches are then transferred in the heating stage and pressed down. Afterwards, the heating stage is heated to a temperature close to the melting temperature. The fiber cross-section is then observed with the SEM until the fibers start to connect with one another. This way, the fixation temperature is determined. In a second experiment, at least the above mentioned steps A and C are carried out until the wanted degree of connection and therefore the wanted strength of connection is reached. For such trial and error experiments, an amount of fibers is placed in a fast heating furnace. To achieve contact points between the fibers, the network can be pressed together or placed on a plate with a space holder and a cover plate. After removing the air/oxygen in the furnace and setting the test atmosphere, the furnace is heated to the possible, i.e. the determined, fixation temperature and held for a certain time, which might be the fixation time. Depending on the result of the fibers, e.g. depending on whether the fibers connected to one another and/or whether the fibers changed their shape, the parameters must be adjusted. In this connection it is noted that three possible outcomes can be expected: 1) the fibers are not sintered, 2) the fibers are sintered but round or 3) the fibers are not sintered but round. For the first outcome, the fixation temperature and/or fixation time should be increased. For the second outcome the fixation temperature and/or the fixation time should be decreased and for the third outcome the heating rate should be increased and the fixation temperature and/or the fixation time decreased.

For some materials it is also beneficial if a protective gas, such as for example argon, nitrogen Ar-W5 (5 vol.-% H2 in Ar), Ar-W2 (2 vol.-% H2 in Ar), a forming gas (5 vol.-% H2 in N2) or other noble gases, is provided at the assembling site 12 in order to prevent the metal fibers 10 from oxidizing. It can be chosen according to the material(s) of the fibers 10 if it is necessary to provide such a protective gas or not.

The contact points 14 of the assembled network can be distributed in an ordered or unordered manner throughout the network depending on the application of the assembled network and fix the fibers to one another. Also, the amount of contact points 14 can be chosen according the application of the network by subjecting the fibers 10 to a higher or lower pressure before carrying out at least steps A and C such that more or less contact points 14 are created. Also the fiber density, i.e. the amount of fibers per volume, and/or the fineness of the fibers can be used to tune the number of contact points 14.

Said contact points 14 also enable an electric conductivity throughout the assembled network. Therefore, a high amount of contact points 14 can be beneficial for applications where a high electrical conductivity of the network is needed. For filters, on the other hand, it may not be that crucial how many contact points 14 are provided throughout the network as long as it still holds all the fibers 10 together.

The fibers 10, which are used for assembling a network according to the invention comprise a length of 1.0 mm or more and/or a width of 100 $\mu$m or less and/or a thickness of 50 $\mu$m or less (see Figs. 2 to 6). Such fibers 10 can, for example, be produced by so called vertical or horizontal melt spinning processes, which are described in documents PCT/EP2020/063026 (not yet published), WO2016/020493 A1 and WO2017/042155 A1. These fibers 10 often comprise a cross-section is shaped oval, rectangular or flat in general. Furthermore, fibers 10 which are produced by melt spinning often store a high amount of energy.

In order to understand the method according to the invention in a better way, several experiments have been conducted which are described below in connection Figs. 2 to 7.

Fibers of the copper alloy (CuSi4 (4 wt.-% Si and 96 wt.-% Cu) and AlSi1 (1% by weight Si and 99% by weight Al)) have been sintered together while maintaining the flat, ribbon like, structure of the fibers. In order to systematically examine the processes, the fibers were heated in an electron microscope with a heating rate of 10 K/min and a video was recorded. Figure 2 shows single frames from the CuSi4 videos at special points such as the start of the sintering (to see that the sharp transitions 14 between the fibers 10 are blurred, left) and the point at which the fibers 10 start to round off so much (right) that constrictions 15 and interruptions 16 are formed, decomposing the fibers 10. The corresponding temperatures are very close to each other, which is why the highest temperature accuracy and control is necessary to achieve good results.

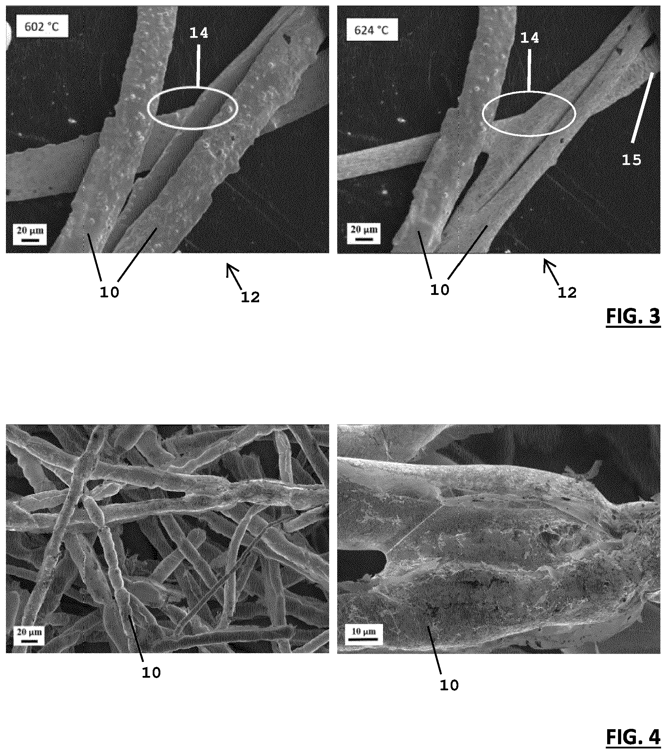

Figure 3 shows frames from a video taken with AlSi1 fibers under the same conditions as the video of Fig. 2. Fig. 3 shows the same characteristic points as explained for Figure 2, i.e. the onset of sintering and the begin of rounding processes. It could be observed that the fibers sinter together at around 602 °C, whereas at 624 °C. Further, between 602 °C and 624 °C the fibers transformed from flat ribbon like fibers towards fibers having a round cross section. This can be recognized by the fibers at 624 °C being thinner than at 602 °C. It is noted that the videos of which frames are shown in Fig. 2 and 3 were recorded under low heating conditions (10 K/min) in a high vacuum condition. These conditions are different from those of the present invention. This is the reason why the values indicated in Fig. 2 and 3 are different from the values described in the tables below. Nevertheless, Fig. 2 and 3 demonstrate the difficulties of sintering the fibers under conventional methods applying lower heating rates.

With classic thermal sintering using furnaces, such as resistance heated furnaces, the fibers 10 are heated with a rate of 10-20 K/min, i.e. relatively slowly. During this time, the fibers 10 undergo a so-called relaxation process and the energy stored in these fibers from their production, for example by the melt spinning process, is slowly released and no longer available for forming points of connection between the metal fibers. The release of the stored energy during slow heating does not only influence the mechanical properties of the fibers 10 but also increases the energy requirement during the actual sintering because the fibers 10 are no longer in their thermodynamic imbalance as they were after production. For this reason, the untreated fibers 10 as obtained from a melt spinning process and for comparison fibers 10 tempered at 300 °C for 1 hour were brought to the sintering temperature in a fast heating furnace (here an infrared furnace) within 1 minute. This temperature was held for 1 minute and then cooled as quickly as possible (from sintering temperature to less than 600 °C in less than 30 seconds). In addition to infrared heaters, other possible heating devices are e.g. ceramic heaters or induction heaters. The very short process time of only 1 minute or less is sufficient for the fibers 10 to sinter with one another at the contact points 14, but the energy and time are not sufficient for the fibers 10 to make a transition into the thermodynamically favoured round shape. This is not possible when applying conventional heating and cooling rates, requiring a lot of time for reaching the target temperature (from sintering temperature to less than 600 °C in some hours). Applying conventional heating and cooling rates still makes it possible to sinter the fibers 10 to one another. However, the sintered fibers have then adapted the idealized round shape and were damaged by constriction 15 or even interruptions 16 which may occur e.g. at twisting points. Due to the very long diffusion paths when the fibers become round, either high temperatures and/or long times are necessary for the transformation into the thermodynamically favoured round shape. This can be avoided by using fibers containing the stored energy e.g. from production by melt spinning. The stored energy can be measured e.g. by DSC measurement, where it can be observed in the form of an exothermic event.

It has further been tested, for how long fibers 10 made out of AlSi1 and CuSi4, respectively, have to be heated at certain temperatures until they reach their idealized round shape. Fibers of AlSi1 had a ribbon like structure with an average length of 30 mm, an average width of 75 $\mu$m and an average thickness of 15 $\mu$m. Fibers of CuSi4 had a ribbon like structure with an average length of 20 mm, an average width of 35 $\mu$m and an average thickness of 7 $\mu$m. For these tests, the fibers were heated within 1 min to the determined fixation temperature indicated in the table below. Said fixation temperatures were maintained for some time, before rapidly natural cooling within 30 sec to around 500 °C and around 20 min to room temperature for CuSi4 and within 30 sec to around 330 °C and 15 min to room temperature for AlSi1. After cooling the fibers were examined about whether they have a rounded cross section. Experiments were repeated with increasing fixation times at the respective fixation temperatures. The results of these tests are indicate in the following table:

| Fiber Material | Fixation Temperature in °C | Time in minutes until fibers have a round cross section |
| --- | --- | --- |
| AlSi1 | 630 | 30 |
| AlSi1 | 660 | 5 |
| CuSi4 | 850 | 30 |
| CuSi4 | 900 | 15 |
| CuSi4 | 950 | 5 |

One can clearly see that the higher the fixation temperature is chosen, the shorter time one has left in order to sinter the fibers 10 to one another without having them transform their outer shape. Furthermore, it can be seen that the temperature clearly depends on the material out of which the fibers 10 are made. Further the fiber size, in particular thickness and width have a certain influence on the velocity with which the cross sectional shape of the fiber transforms from flat to round. The above experiments demonstrated how the skilled person can easily determine the suitable conditions by simple trial and error for each fiber material.

Even though metal fibers differing in regard to their material and/or dimensions may require different conditions for fixing them to one another, above empirical studies proof that if the time frame during which the fibers 10 are sintered to one another is reduced to a minimum, said fibers 10 can be connected to a network without having the fibers 10 changing their length, shape and/or diameter.

Figure 4 shows a conventionally sintered network of previously flat fibers 10. The formation of constrictions 15 and interruptions 16 of the fibers 10 can be clearly seen. Further, the cross section of the fibers was transformed from flat to round. The formation of sintering necks, i.e. constrictions, corresponds to the current theory as described in connection with Fig. 1.

Table 1 shows the sintering temperatures (holding time 1 min in each case) for the thermally untreated (as obtained from melt spinning) and for tempered (1 hour at 300 °C under argon atmosphere) CuSi4 fibers 10 with a ribbon like structure having an average length of 20 mm, an average width of 35 $\mu$m and an average thickness of 7 $\mu$m. Table 2 analogously shows the same for AlSi1 fibers 10 having an average length of 30 mm, an average width of 75 $\mu$m and an average thickness of 15 $\mu$m. Comparisons between untreated and tempered fibers were made, using a tube furnace under a protective gas atmosphere (argon) providing heating rates of 10 K/min. It was found that a temperature of at least 950 °C and a holding time of at least 1 hour are necessary for tempered CuSi4 fibers 10 in order to sinter the fibers 10 together. After sintering, the previously tempered fibers 10 are almost perfectly round and, in some cases, are severely restricted in length by constrictions 15 and interruptions 16. In contrast, sintering of thermally untreated CuSi4 fibers begins at significantly lower temperatures (between 890 and 910 °C) compared to the tempered fibers (begin of sintering above 950 °C) and is completed within 0.5 to 5 minutes for CuSi4 fibers and 0.5 to 5 minutes for AlSi1 fibers, depending on the fixation temperature with lower fixation temperatures requiring longer fixation times.

Table 1: CuSi4 sinter-parameters

| Fixation temperature °C | thermally untreated fibers | tempered fibers |
|---|---|---|
| 890 | not sintered | not sintered |
| 910 | sintered | not sintered |
| 930 | sintered | not sintered |
| 950 | sintered | not sintered; start of rounding |
| 970 | sintered; start of rounding | sintered; rounded |

Table 2: AlSi1 sinter-parameters.

| temperature °C | thermally untreated fibers | tempered fibers |
|---|---|---|
| 620 | not sintered | not sintered |
| 630 | sintered | not sintered |
| 640 | sintered | sintered; start of rounding |
| 660 | sintered | sintered; rounded |

Comparative experiments with relaxed fibers 10 (thermally treated for 1h at 300 °C under protective gas, no change in shape, only degradation of the defects and release of stored energies) show that the sintering described here is not possible or only possible at higher temperatures in comparison to fibers 10 which were untreated. For the relaxed fibers, the temperature window between begin of sintering and change of fiber shape is very narrow. However, when using fibers having stored energy, e.g. fibers showing an exothermic signal during DSC measurement, the temperature window for sintering the fibers to one another without rounding, is much wider. With the slow heating and cooling rates of know sintering processes, the fibers 10 experience a relaxation process before sintering temperatures can be reached, releasing stored energy too early, so it is not available for driving the sintering process. When applying low heating rates, the fibers are tempered before reaching the sintering temperature. In consequence, they will behave similar to the tempered fibers reported in tables 1 and 2. The higher the energy stored in the fibers 10 during the manufacturing process, the lower the required sintering temperature and time can be.

The greatest possible energy can be introduced through high quenching rates, e.g. by the known melt spinning process. Due to the fundamental mechanisms of the process, the method according to the invention can be transferred to almost all metallic, metallic-inorganic and comparable alloys and materials, as long as sufficient energy is stored in them.

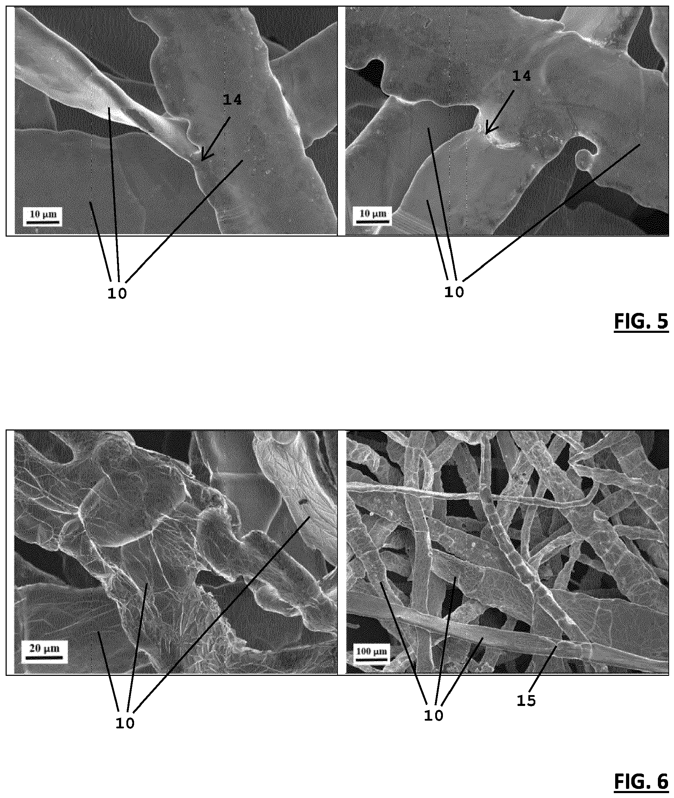

Fig. 5 shows CuSi4 fibers 10 which have been sintered with the method according to the invention such that they have still retained their original flat shape. Fig. 6 shows the same for AlSi1 fibers 10. It can clearly be seen that the fibers 10 in Figs. 5 and 6 comprise an almost constant width along their length, i.e. no constriction 15 or even interruptions 16 were formed which may lead to a complete destruction of the fibers 10. That is, the width of the fibers 10 in the network according to the invention does not vary more than 40%, preferably not even more than 30%.

Finally, Fig. 7 shows a network of sintered AlSi1 fibers 10 with a flat cross section and which surfaces have been cleaned with the above mentioned cleaning step prior to heating said fibers 10 to the fixation temperature. It can be seen in Fig. 7 that the surfaces of the fibers 10 appear smoother compared to the AlSi1 fibers shown in Fig. 6. Hence, it can be concluded that the surfaces of the fibers 10 have been cleaned from impurities which were present before. Such impurities are often caused as a biproduct of the manufacturing processes of the fibers 10 which cannot be avoided. Hence, in order to achieve a good sintering result, the additional step of cleaning the fibers 10 by heating them to a temperature selected in the range of 40% to 60% of their melting point can be a preferred option.

In order to show the effectivity of the additional step of cleaning the fibers 10, three experiments have been carried out to prove that the advantages of the cleaning step.

**Experiment 1: Sintering of (melt spinning) metal fibers in a ceramic heating element oven**

For experiment 1 a self-constructed oven has been used that includes a ceramic heating element. A plurality of fibers 10 being made of an aluminium-silicon-alloy (1 w.-% Si in Al) and produced via conventional Melt Spinning (as explained above) has been placed on the heating surfaces of the oven. Then, the heating surfaces heated the fibers 10 within 4 minutes up to a temperature of 640 °C which relates to a mean heating rate of about 155 K/min. In this connection it is additionally noted that commonly known ovens start to heat at a higher heating rate and tend to drop the heating rate as soon as they reach higher temperatures.

After heating the fibers 10 to the above fixation temperature of 640 °C, said temperature was held for 10 seconds, 20 seconds, 30 seconds and 60 seconds, respectively. Thereby, all fibers 10 connected, i.e. sintered, to one another regardless of the duration at which the fibers 10 have been held at said fixation temperature.

The following cooling step was conducted naturally, i.e. the fibers 10 cooled down without external interference. After about 1 minute the temperature of the fibers 10 was already under 500 °C, and then under 300 °C after about 5 minutes, which relates to a mean cooling rate of about 68 K/min for cooling the fibers from 640 °C to 300 °C.

As a result it could be seen that the fibers 10 sintered to one another without changing the cross sections during said process.

The above experiment 1 was further conducted under a protective gas (i.e. Ar) to prevent the fibers 10 from oxidizing.

**Experiment 2: sintering of metal (extraction wheel) fibers in a ceramic heating element oven**

This experiment 2 was conducted in the same manner as experiment 1. However, even though the fibers 10 used were made out of the same alloy, i.e. AlSi1, they have been produced with the so called extraction wheel method. Said extraction wheel method is a commonly known method to produce (metal) fibers (see e.g. Cramer, A., et al., Tailored magnetic fields in the melt extraction of metallic filaments. Metallurgical and Materials Transactions B, 2009. 40(3): p. 337-344; or Park, M.H., Y.S. Song, and J.H. Won. A Study on the Fabrication of Metal Fiber by Fine Melt Extraction Process. in Advanced Materials Research. 2007. Trans Tech Publ.). Due to the use of the extraction wheel method the fibers 10 produced therewith were rougher, i.e. not as fine, as the ones produced via melt spinning. Therefore, an additional cover plate has been put on top of the fibers 10 such that the plurality of fibers 10 can better connect with one another.

After carrying out the heating and cooling steps at the same conditions as mentioned above, it could be seen that also these sintered fibers 10 did not change their cross sections after the sintering process such that they still comprised their half-moon shaped cross sections (which as caused by the production method) even after being connected with one another.

**Experiment 3: Sintering of metal (melt spinning) fibers in in a ceramic heating element oven with an additional cleaning process carried out**

This experiment 3 has been conducted in the same manner as experiment 1. However, the fibers 10 have additionally been heated to a temperature of about 400 °C prior to being sintered to one another to prove that impurities and/or additives can be left on the surfaces of the fibers 10 during their production. As an example, a thin paraffin oil as well as PVA (polyvinylacohol) have been used. For both cases, the fibers 10 have been kept at the above mentioned cleaning temperature for about 5 minutes, such that the additives present on the surfaces decomposed and could be removed with a stream of gas applied at the assembling site 12 of the fibers 10.

After removing the decomposed, i.e. the evaporated/decomposed/burnt, additives from the assembling site 12 the fibers have been heated from 400 °C to the fixation temperature of 640 °C in about 2 minutes, i.e. at a mean heating rate of about 70 K/min. Just as in experiment 1, said fixation temperature has been held for several seconds before being cooled down again at a mean cooling rate of about 68 K/min.

It could again be proven that the fibers still had the same cross sections as before and that additionally no residues have been left on their surfaces. This can be seen in Fig. 7 that shows the sintered fibers 10 which still have a flat cross section and which do not show any residues of paraffin oil and or PVA on their surfaces.

Hence, after comparing the above three experiments 1 to 3, one could see that generally, the additional step of cleaning is not necessary to being able to sinter the fibers one to another without having them change their cross sections. However, the additional step of cleaning can help enhancing the sintering quality as the resulting clean surfaces can be connected better to one another compared to contaminated surfaces.

**Claims**

1. Method of assembling a fiber network comprising a plurality of metal fibers (10), wherein the method comprises the following steps:

    - providing a loose network out of the plurality of metal fibers (10) at an assembling site (12);
    - fixing the plurality of metal fibers (10) to one another by forming contact points (14) between the single metal fibers (10) by the following steps of:

heating the plurality of fibers (10) at a heating rate higher than 50 K/min, in particular higher than 100 K/min, especially higher than 200 K/min, preferably higher than 1000 K/min, to a fixation temperature selected in the range of 50 to 98% of their melting point temperature; and

cooling the plurality of fibers (10) at a cooling rate higher than 50 K/min, preferably higher than 100 K/min.

2. The method of assembling a fiber network according to claim 1,

further comprising a step of keeping said fixation temperature for a fixation time selected in the range of 0 seconds to 30 minutes, in particular in the range of 0 seconds to 15 minutes, preferably in the range of 0 seconds to 5 minutes, with said step of keeping said fixation temperature being carried out before cooling the plurality of fibers.

3. The method of assembling a fiber network according to claim 1 or 2, comprising a further step to be carried out before the step of fixing the plurality of fibers to one another, with said further step comprising cleaning the plurality of fibers by heating the plurality of fibers to a cleaning temperature selected in the range of 20 to 60% of the melting temperature of the fibers, in particular from room temperature to 60% of the melting temperature of the fibers,

wherein the step of cleaning the plurality of fibers optionally comprises applying a flow of gas at the assembling site, and/or

wherein the step of cleaning the plurality of fibers optionally comprises reducing the atmospheric pressure at the assembling site, preferably to a pressure of less than 80 kPa, more preferably to less than 50 kPa, even more preferably to less than 10 kPa, in particular to less than 1 kPa, less than 0.1 kPa or even to 0.0001 kPa or less, and/or

wherein said further step of cleaning optinally comprises determining a compound to be removed and selecting a reduction of the pressure and/or the increase of the temperature based on a vapour pressure curve of said compound to be removed, and comprises in particular further, reduction of the pressure and/or increase of the temperature based on the vapour pressure curve either in a step wise or in a continuous manner.

4. The method of assembling a fiber network according to one of the preceding claims,

wherein before fixing the plurality of metal fibers (10) to one another the method further comprises a step of subjecting the plurality of metal fibers (10) to a predetermined pressure, which is in particular less than 1 GPa.

5. The method of assembling a fiber network according to one of the preceding claims,

wherein a protective gas is provided at said assembling site (12), such as argon, Ar-W5 (5 vol.-% H2 in Ar), Ar-W2 (2 vol.-% H2 in Ar), a forming gas (5 vol.-% H2 in N2) or other noble gases.

6. The method of assembling a fiber network according to one of the preceding claims,

wherein the step of heating the fibers (10) is carried out by an induction furnace, infrared furnace, high temperature ceramic heating elements and/or zone furnaces such as, for example, conveyor furnaces, wherein the step of heating is preferably carried out by a continuous furnace.

7. The method of assembling a fiber network according to one of the preceding claims,

wherein the fixation temperature is selected in the range of 80 to 98%, in particular in the range of 90 to 98%, of the melting point temperature of the metal fibers.

8. The method of assembling a fiber network according to one of the preceding claims,

wherein steps of heating the plurality of fibers, the optional step of keeping a fixation temperature, and the step of cooling the plurality of fibers are carried out in a predetermined period of time which is less than 30 minutes, preferably less than 15 minutes, in particular less than 5 minutes, especially less than 1 minute.

9. The method of assembling a fiber network according to one of the preceding claims,

wherein in the step of cooling the fibers, the cooling rate is maintained higher than 50 K/min, preferably higher than 100 K/min, until the fibers are cooled to a temperature of 60% or less of the melting point temperature of the metal fibers.

10. The method of assembling a fiber network according to one of the preceding claims,

wherein the metal fibers (10) comprise a length of 1.0 mm or more and/or a width of 100 $\mu$m or less and/or a thickness of 50 $\mu$m or less.

11. The method of assembling a fiber network according to one of the preceding claims,

wherein the width of the fibers along their length changes by less than 20%, more preferably by less than 10%, even more preferably by less than 5% or most preferably by less than 1%, compared to the initial width of the fibers before conducting the step of heating the plurality of fibers, and/or wherein the metal fibers (10) before and/or after fixing them one to another show an exothermic event when heated in a DSC measurement, wherein the exothermic event releases energy preferably in an amount of 0.1 kJ/g or more, more preferably in an amount of 0.5 kJ/g or more, even more preferably in an amount of 1.0 kJ/g or more and most preferably in an amount of 1.5 kJ/g or more, and/or

wherein the metal fibers (10) comprise a non-round cross section, in particular a rectangular, quadratic, partial circular or an elliptical cross section with a large axis and a small axis, wherein a ratio of the small axis to the large axis lies optionally the range of 1 to 0.05, preferably in the range of 0.7 to 0.1, in particular in the range of 0.5 to 0.1.

12. The method of assembling a fiber network according to one of the preceding claims,
wherein the metal fibers (10) are in electrical contact with one another.

13. The method of assembling a fiber network according to one of the preceding claims,
wherein the metal fibers (10) are in direct electrical contact with one another.

14. The method of assembling a fiber network according to one of the preceding claims,
wherein the metal fibers (10) contain at least one of copper, silver, gold, nickel, palladium, platinum, cobalt, iron, chromium, vanadium, titanium, aluminum, silicon, lithium, manganese, boron, combinations of the foregoing and alloys containing one or more of the foregoing, such as CuSn8, CuSi4, AlSi1, Ni, stainless steel, Cu, Al or vitrovac alloys.

15. Network of metal fibers that is obtainable by the method according to one of the preceding claims,

comprising a plurality of metal fibers fixed one to another at contact points (14);
wherein the metal fibers (10) comprise a non-round cross section, in particular a rectangular, quadratic, partial circular or an elliptical cross section with a large axis and a small axis, or
wherein the metal fibers (10) comprise a round cross section, and
wherein the fibers (10) comprise a width which is generally constant along a length of the fiber such that a variation of the width of the fiber along its length is less than 40%, preferably less than 30%, in particular less than 20%.

## Patentansprüche

1. Verfahren zum Zusammenbauen eines Fasernetzwerks, das eine Vielzahl von Metallfasern (10) umfasst, wobei das Verfahren die folgenden Schritte umfasst:

- Bereitstellen eines losen Netzwerks aus der Vielzahl von Metallfasern (10) an einer Zusammenbaustelle (12);
- Befestigen der Vielzahl von Metallfasern (10) aneinander durch Bilden von Kontaktpunkten (14) zwischen den einzelnen Metallfasern (10) durch die folgenden Schritte:
Erwärmen der Vielzahl von Fasern (10) mit einer Erwärmungsrate von mehr als 50 K/min, insbesondere mehr als 100 K/min, vornehmlich mehr als 200 K/min, vorzugsweise mehr als 1000 K/min, auf eine Befestigungstemperatur, die im Bereich von 50 bis 98 % ihrer Schmelzpunkttemperatur ausgewählt ist; und Abkühlen der Vielzahl von Fasern (10) mit einer Abkühlrate von mehr als 50 K/min, vorzugsweise mehr als 100 K/min.

2. Verfahren zum Zusammenbauen eines Fasernetzwerks nach Anspruch 1, ferner umfassend einen Schritt des Haltens der Befestigungstemperatur für eine Befestigungszeit, die im Bereich von 0 Sekunden bis 30 Minuten, insbesondere im Bereich von 0 Sekunden bis 15 Minuten, vorzugsweise im Bereich von 0 Sekunden bis 5 Minuten, ausgewählt ist, wobei der Schritt des Haltens der Befestigungstemperatur vor dem Abkühlen der Vielzahl von Fasern durchgeführt wird.

3. Verfahren zum Zusammenbauen eines Fasernetzwerks nach Anspruch 1 oder 2,

umfassend einen weiteren Schritt, der vor dem Schritt des Befestigens der Vielzahl von Fasern aneinander durchzuführen ist, wobei der weitere Schritt das Reinigen der Vielzahl von Fasern durch Erwärmen der Vielzahl von Fasern auf eine Reinigungstemperatur, die im Bereich von 20 bis 60 % der Schmelztemperatur der Fasern, insbesondere von Raumtemperatur bis 60 % der Schmelztemperatur der Fasern, ausgewählt ist, umfasst,

wobei der Schritt des Reinigens der Vielzahl von Fasern optional das Anlegen eines Gasstroms an der Zusammenbaustelle umfasst, und/oder wobei der Schritt des Reinigens der Vielzahl von Fasern optional das Reduzieren des atmosphärischen Drucks an der Zusammenbaustelle umfasst, vorzugsweise auf einen Druck von weniger als 80 kPa, mehr bevorzugt auf weniger als 50 kPa, noch mehr bevorzugt auf weniger als 10 kPa, insbesondere auf weniger als 1 kPa, weniger als 0,1 kPa oder sogar auf 0,0001 kPa oder weniger, und/oder wobei der weitere Schritt des Reinigens optional das Bestimmen einer zu entfernenden Verbindung und das Auswählen einer Reduzierung des Drucks und/oder der Erhöhung der Temperatur basierend auf einer Dampfdruckkurve der zu entfernenden Verbindung umfasst, und insbesondere ferner das Reduzieren des Drucks und/oder die Erhöhung der Temperatur basierend auf der Dampfdruckkurve entweder schrittweise oder kontinuierlich umfasst.

4. Verfahren zum Zusammenbauen eines Fasernetzwerks nach einem der vorhergehenden Ansprüche, wobei das Verfahren vor dem Befestigen der Vielzahl von Metallfasern (10) aneinander ferner einen Schritt des Beaufschlagens der Vielzahl von Metallfasern (10) mit einem vorbestimmten Druck umfasst, der insbesondere weniger als 1 GPa beträgt.

5. Verfahren zum Zusammenbauen eines Fasernetzwerks nach einem der vorhergehenden Ansprüche, wobei ein Schutzgas an der Zusammenbaustelle (12) bereitgestellt wird, wie Argon, Ar-W5 (5 Vol.-% H2 in Ar), Ar-W2 (2 Vol.-% H2 in Ar), ein Formiergas (5 Vol.-% H2 in N2) oder andere Edelgase.

6. Verfahren zum Zusammenbauen eines Fasernetzwerks nach einem der vorhergehenden Ansprüche,

   wobei der Schritt des Erwärmens der Fasern (10) durch einen Induktionsofen, Infrarotofen, Hochtemperatur-Keramikheizelemente und/oder Zonen-öfen, wie zum Beispiel Förderöfen, durchgeführt wird,
   wobei der Schritt des Erwärmens vorzugsweise durch einen kontinuierlichen Ofen durchgeführt wird.

7. Verfahren zum Zusammenbauen eines Fasernetzwerks nach einem der vorhergehenden Ansprüche, wobei die Befestigungstemperatur im Bereich von 80 bis 98 %, insbesondere im Bereich von 90 bis 98 %, der Schmelzpunkttemperatur der Metallfasern ausgewählt ist.

8. Verfahren zum Zusammenbauen eines Fasernetzwerks nach einem der vorhergehenden Ansprüche, wobei die Schritte des Erwärmens der Vielzahl von Fasern, der optionale Schritt des Haltens einer Befestigungstemperatur und der Schritt des Abkühlens der Vielzahl von Fasern in einem vorbestimmten Zeitraum durchgeführt werden, der weniger als 30 Minuten, vorzugsweise weniger als 15 Minuten, insbesondere weniger als 5 Minuten, vornehmlich weniger als 1 Minute, beträgt.

9. Verfahren zum Zusammenbauen eines Fasernetzwerks nach einem der vorhergehenden Ansprüche, wobei in dem Schritt des Abkühlens der Fasern die Abkühlrate höher als 50 K/min, vorzugsweise höher als 100 K/min, gehalten wird, bis die Fasern auf eine Temperatur von 60 % oder weniger der Schmelzpunkttemperatur der Metallfasern abgekühlt sind.

10. Verfahren zum Zusammenbauen eines Fasernetzwerks nach einem der vorhergehenden Ansprüche, wobei die Metallfasern (10) eine Länge von 1,0 mm oder mehr und/oder eine Breite von 100 $\mu$m oder weniger und/oder eine Dicke von 50 $\mu$m oder weniger umfassen.

11. Verfahren zum Zusammenbauen eines Fasernetzwerks nach einem der vorhergehenden Ansprüche,

    wobei sich die Breite der Fasern entlang ihrer Länge um weniger als 20 %, mehr bevorzugt um weniger als 10 %, noch mehr bevorzugt um weniger als 5 % oder am meisten bevorzugt um weniger als 1 % ändert, verglichen mit der anfänglichen Breite der Fasern vor dem Durchführen des Schritts des Erwärmens der Vielzahl von Fasern, und/oder
    wobei die Metallfasern (10) vor und/oder nach dem Fixieren derselben aneinander ein exothermes Ereignis zeigen, wenn sie in einer DSC-Messung erwärmt werden, wobei das exotherme Ereignis Energie vorzugsweise in einer Menge von 0,1 kJ/g oder mehr, mehr bevorzugt in einer Menge von 0,5 kJ/g oder mehr, noch mehr bevorzugt in einer Menge von 1,0 kJ/g oder mehr und am meisten bevorzugt in einer Menge von 1,5 kJ/g oder mehr freisetzt, und/oder
    wobei die Metallfasern (10) einen nicht-runden Querschnitt umfassen, insbesondere einen rechteckigen, quadratischen, teilkreisförmigen oder elliptischen Querschnitt mit einer großen Achse und einer kleinen Achse, wobei ein Verhältnis der kleinen Achse zu der großen Achse optional im Bereich von 1 bis 0,05 liegt, vorzugsweise im Bereich von 0,7 bis 0,1, insbesondere im Bereich von 0,5 bis 0,1.

12. Verfahren zum Zusammenbauen eines Fasernetzwerks nach einem der vorhergehenden Ansprüche, wobei die Metallfasern (10) in elektrischem Kontakt miteinander sind.

13. Verfahren zum Zusammenbauen eines Fasernetzwerks nach einem der vorhergehenden Ansprüche, wobei die Metallfasern (10) in direktem elektrischem Kontakt miteinander sind.

14. Verfahren zum Zusammenbauen eines Fasernetzwerks nach einem der vorhergehenden Ansprüche, wobei die Metallfasern (10) mindestens eines von Kupfer, Silber, Gold, Nickel, Palladium, Platin, Kobalt, Eisen, Chrom, Vanadium, Titan, Aluminium, Silizium, Lithium, Mangan, Bor, Kombinationen der Vorstehenden und Legierungen, die eines oder mehrere der Vorstehenden enthalten, wie etwa CuSn8, CuSi4, AISi1, Ni, Edelstahl, Cu, Al oder Vitrovac-Legierungen, enthalten.

15. Netzwerk von Metallfasern, das durch das Verfahren nach einem der vorhergehenden Ansprüche erhältlich ist,

umfassend eine Vielzahl von Metallfasern, die an Kontaktpunkten (14) aneinander befestigt sind;
wobei die Metallfasern (10) einen nicht-runden Querschnitt umfassen, insbesondere einen rechteckigen, quadratischen, teilkreisförmigen oder elliptischen Querschnitt mit einer großen Achse und einer kleinen Achse, oder wobei die Metallfasern (10) einen runden Querschnitt umfassen, und wobei die Fasern (10) eine Breite umfassen, die im Allgemeinen entlang einer Länge der Faser konstant ist, sodass eine Variation der Breite der Faser entlang ihrer Länge weniger als 40 %, bevorzugt weniger als 30 %, insbesondere weniger als 20 % beträgt.

**Revendications**

1. Procédé d'assemblage d'un réseau de fibres comprenant une pluralité de fibres métalliques (10), dans lequel le procédé comprend les étapes suivantes :

   - fournir un réseau lâche à partir de la pluralité de fibres métalliques (10) au niveau d'un site d'assemblage (12) ;
   - fixer la pluralité de fibres métalliques (10) les unes aux autres en formant des points de contact (14) entre les fibres métalliques uniques (10) via les étapes consistant à :

      chauffer la pluralité de fibres (10) à une vitesse de chauffe supérieure à 50 K/min, en particulier supérieure à 100 K/min, plus particulièrement supérieure à 200 K/min, de préférence supérieure à 1 000 K/min, à une température de fixation choisie dans la plage de 50 à 98 % de leur température de point de fusion ; et refroidir la pluralité de fibres (10) à une vitesse de refroidissement supérieure à 50 K/min, de préférence supérieure à 100 K/min.

2. Procédé d'assemblage d'un réseau de fibres selon la revendication 1, comprenant en outre une étape consistant à maintenir ladite température de fixation pendant une durée de fixation choisie dans la plage de 0 seconde à 30 minutes, en particulier dans la plage de 0 seconde à 15 minutes, de préférence dans la plage de 0 seconde à 5 minutes, ladite étape de maintien de ladite température de fixation étant exécutée avant l'étape de refroidissement de la pluralité de fibres.

3. Procédé d'assemblage d'un réseau de fibres selon la revendication 1 ou 2, comprenant une étape supplémentaire devant être exécutée avant l'étape de fixation de la pluralité de fibres les unes aux autres, ladite étape supplémentaire comprenant de nettoyer la pluralité de fibres en chauffant la pluralité de fibres à une température de nettoyage choisie dans la plage de 20 à 60 % de la température de fusion des fibres, en particulier depuis une température ambiante jusqu'à 60 % de la température de fusion des fibres, dans lequel l'étape de nettoyage de la pluralité de fibres comprend en option d'appliquer un flux de gaz au niveau du site assemblage, et/ou dans lequel l'étape de nettoyage de la pluralité de fibres comprend en option de réduire la pression atmosphérique au niveau du site d'assemblage, de préférence à une pression inférieure à 80 kPa, de manière préférée inférieure à 50 kPa, de manière encore préférée inférieure à 10 kPa, en particulier inférieure à 1 kPa, inférieure à 0,1 kPa ou même à 0,0001 kPa ou moins, et/ou dans lequel ladite étape supplémentaire de nettoyage comprend en option de déterminer un composé devant être retiré et de choisir une réduction de la pression et/ou l'augmentation de la température sur la base d'une courbe de pression de vapeur dudit composant devant être retiré, et comprend en particulier en outre une réduction de la pression et/ou une augmentation de la température sur la base de la courbe de pression de vapeur soit par paliers, soit en continu.

4. Procédé d'assemblage d'un réseau de fibres selon l'une des revendications précédentes, dans lequel, avant la fixation de la pluralité de fibres métalliques (10) les unes aux autres, le procédé comprend en outre une étape consistant à soumettre la pluralité de fibres métalliques (10) à une pression prédéterminée, qui en particulier inférieure à 1 GPa.

5. Procédé d'assemblage d'un réseau de fibres selon l'une des revendications précédentes, dans lequel un gaz de protection est fourni au niveau du site d'assemblage (12), tel que de l'argon, Ar-W5 (5 %vol H2 dans Ar), Ar-W2 (2 %vol H2 dans Ar), un gaz de formation (5 %vol H2 dans N2), ou d'autres gaz nobles.

6. Procédé d'assemblage d'un réseau de fibres selon l'une des revendications précédentes,

dans lequel l'étape de chauffage des fibres (10) est exécutée par un four à induction, un four infrarouge, des éléments de chauffe en céramique haute température et/ou des fours à zone tels que, par exemple, des fours à convoyeur, dans lequel l'étape de chauffage est de préférence exécutée par un four continu.

7. Procédé d'assemblage d'un réseau de fibres selon l'une des revendications précédentes, dans lequel la température de fixation est choisie dans la plage de 80 à 98 %, en particulier dans la plage de 90 à 98 %, de la température de point de fusion des fibres métalliques.

8. Procédé d'assemblage d'un réseau de fibres selon l'une des revendications précédentes, dans lequel les étapes de chauffage de la pluralité de fibres, l'étape optionnelle de maintien d'une température de fixation, et l'étape de refroidissement de la pluralité de fibres sont exécutées dans une période temporelle prédéterminée qui est inférieure à 30 minutes, de préférence inférieure à 15 minutes, en particulier inférieure à 5 minutes, plus particulièrement inférieure à 1 minute.

9. Procédé d'assemblage d'un réseau de fibres selon l'une des revendications précédentes, dans lequel, dans l'étape de refroidissement des fibres, la vitesse de refroidissement est maintenue supérieure à 50 K/min, de préférence supérieure à 100 K/min, jusqu'à ce que les fibres soient refroidies à une température de 60 % ou moins de la température de point de fusion des fibres métalliques.

10. Procédé d'assemblage d'un réseau de fibres selon l'une des revendications précédentes, dans lequel les fibres métalliques (10) comprennent une longueur de 1,0 mm ou plus et/ou une largeur de 100 $\mu$m ou moins et/ou une épaisseur de 50 $\mu$m ou moins.

11. Procédé d'assemblage d'un réseau de fibres selon l'une des revendications précédentes,

dans lequel la largeur des fibres le long de leur longueur change à raison de moins de 20 %, de manière préférée de moins de 10 %, de manière encore préférée de moins de 5 % ou de toute préférence de moins de 1 %, par comparaison à la largeur initiale des fibres avant d'effectuer l'étape de chauffage de la pluralité de fibres, et/ou dans lequel les fibres métalliques (10), avant et/ou après les avoir fixées les unes aux autres, montrent un événement exothermique quand elles sont chauffées dans un mesurage DSC, l'événement exothermique libérant de l'énergie de préférence dans une quantité de 0,1 kJ ou plus, de manière préférée dans une quantité de 0,5 kJ/g ou plus, de manière encore préférée dans une quantité de 1,0 kJ/g ou plus, et de toute préférence dans une quantité de 1,5 kJ/g ou plus, et/ou dans lequel les fibres métalliques (10) comprennent une section transversale non arrondie, en particulier une section transversale rectangulaire, carré, partiellement circulaire ou elliptique avec un grand axe et un petit axe, un rapport du petit axe sur le grand axe se trouvant en option dans la plage de 1 à 0,05, de préférence dans la plage de 0,7 à 0,1, en particulier dans la plage de 0,5 à 0,1.

12. Procédé d'assemblage d'un réseau de fibres selon l'une des revendications précédentes, dans lequel les fibres métalliques (10) sont en contact électrique les unes avec les autres.

13. Procédé d'assemblage d'un réseau de fibres selon l'une des revendications précédentes, dans lequel les fibres métalliques (10) sont en contact électrique direct les unes avec les autres.

**14.** Procédé d'assemblage d'un réseau de fibres selon l'une des revendications précédentes,
dans lequel les fibres métalliques (10) contiennent l'un au moins des éléments parmi : cuivre, argent, or, nickel, palladium, platine, cobalt, fer, chrome, vanadium, titane, aluminium, silicium, lithium, manganèse, bore, des combinaisons des éléments précédents et des alliages contenant un ou plusieurs des éléments précédents, tels que des alliages CuSn8, CuSi4, AlSi1, Ni, acier inoxydable, Cu, Al ou vitrovac.

**15.** Réseau de fibres métalliques qui peut être obtenu via le procédé selon l'une des revendications précédentes,

comprenant une pluralité de fibres métalliques fixées les unes aux autres au niveau de points contact (14) ;
dans lequel les fibres métalliques (10) comprennent une section transversale non arrondie, en particulier une section transversale rectangulaire, carré, partiellement circulaire ou elliptique avec un grand axe et un petit axe, ou dans lequel les fibres métalliques (10) comprennent une section transversale arrondie, et
dans lequel les fibres métalliques (10) comprennent une largeur qui est généralement constante le long d'une longueur de la fibre de telle sorte qu'une variation de la largeur de la fibre le long de sa longueur est inférieure à 40 %, de préférence inférieure à 30 %, en particulier inférieure à 20 %.

**FIG. 1**

**FIG. 2**

**FIG. 3**

**FIG. 4**

**FIG. 5**

**FIG. 6**

**FIG. 7**

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2020063026 W
- WO 2016020493 A1
- WO 2017042155 A1

### Non-patent literature cited in the description

- **CRAMER, A. et al.** Tailored magnetic fields in the melt extraction of metallic filaments.. *Metallurgical and Materials Transactions B*, 2009, vol. 40 (3), 337-344
- A Study on the Fabrication of Metal Fiber by Fine Melt Extraction Process.. **PARK, M.H.** ; **Y.S. SONG** ; **J.H. WON.** Advanced Materials Research.. Trans Tech, 2007